Europäisches Patentamt

European Patent Office

Office européen des brevets

(11) Publication number: **0 275 367 B1**

# EUROPEAN PATENT SPECIFICATION

(45) Date of publication of patent specification: **14.09.94**   (51) Int. Cl.5: **G01F 1/84**

(21) Application number: **87115021.5**

(22) Date of filing: **14.10.87**

(54) **Method and apparatus for measuring mass flow.**

(30) Priority: **14.10.86 US 918404**
**04.11.86 US 926493**

(43) Date of publication of application:
**27.07.88 Bulletin 88/30**

(45) Publication of the grant of the patent:
**14.09.94 Bulletin 94/37**

(84) Designated Contracting States:
**AT BE CH DE ES FR GB GR IT LI LU NL SE**

(56) References cited:
**EP-A- 0 196 150      WO-A-86/00699**
**WO-A-88/02105      WO-A-88/02476**
**DE-A- 3 230 445      US-A- 4 127 028**
**US-A- 4 187 721**

(73) Proprietor: **ABB K-FLOW INC.**

**Millville, New Jersey 08332 (US)**

(72) Inventor: **Kun, Sandor**
**Also-Torokvesz Street 4**
**H-1022 Budapest (HU)**
Inventor: **Balazs, Lajos**
**Irmandi Street 21**
**H-1112 Budapest (HU)**
Inventor: **Glodi, Istvan**
**Zrinyi Street 5**
**H-1195 Budapest (HU)**
Inventor: **Toth, Zoltan**
**Levai Street 15**
**H-2040 Budaors (HU)**
Inventor: **Alesz, Jozsef**
**Nadorfejervari Street 28**
**H-1119 Budapest (HU)**
Inventor: **Szabo, Laszlo**
**Juhasz Gy. Street 38**
**H-1039 Budapest (HU)**
Inventor: **Kane, Martin**
**109 S. Berkley**
**Atlantic City, New Jersey (US)**
Inventor: **Pratt, Wayne**
**8219 E. Morgan Trail**
**Scottsdale, Arizona 85254 (US)**

(74) Representative: **Frohwitter, Bernhard,**
**Dipl.-Ing. et al**
**Patent- und Rechtsanwälte**
**Bardehle . Pagenberg . Dost . Altenburg .**
**Frohwitter . Geissler & Partner**
**Galileiplatz 1**
**D-81679 München (DE)**

## Description

### Field of the Invention

This invention relates to a method and apparatus for measuring mass flow rate of a fluent material flowing through a conduit by determining the Coriolis reaction of the fluid in response to an applied oscillation of the conduit. The flow within a conduit or tube, which is oscillated transverse to the direction of flow, will react with an oppositely directed force on opposite sides of the position of the applied oscillation to the flow tube. This reaction will be proportional to the mass flow within the conduit. The invention of the present application relates to sensing the movement of the conduit or tube due to this Coriolis reaction to determine the mass flow.

The invention includes the electrical interface between the sensing structure and a microprocessor based system that determines the correlation between the conduit movement due to the Coriolis reaction and the mass flow rate within the conduit. The invention contemplates the use of magnetic or optical type sensors that output signals proportional to the motion of the conduit movement. Additionally, the invention contemplates the determination of the mass flow rate by the measurement of the amount of work applied to a resilient flow tube structure by means of the distributed Coriolis reaction acting over each oscillation cycle.

### Background of the Invention

It is known to utilize the Coriolis reaction of a fluid on a flow tube in order to determine the mass flow rate through the tube. Original developments in this area utilized gyroscopic principles and included a continuous flow tube loop rotated about one axis so as to produce a constant Coriolis reaction about a separate axis of the loop. This type flow meter is exemplified by Unites States Patent Nos. 2,624,198 and 2,813,423. Later developed flow meters utilized a circular flow loop to simulate the gyroscopic type movement found in these previous type flow meters. U.S. Patent No. 2,865,201 teaches a circular flow tube loop that is oscillated about an axis within the plane of the loop so as to produce an alternating Coriolis reaction on opposite sides of the axis. U.S. Patent Nos. 3,355,944 and 3,485,098 teach the use of a rigidly mounted, projecting U-shaped conduit having a partial curvature or deflection of the flow from the axis line formed by the inlet and outlet of the tubing. The flow tube is oscillated at the point of maximum deflection from the axis transverse to the flow and the flow tube. Sensors are positioned on opposite sides of the applied oscillation position to measure the movement of the flow tube in response to the opposite side Coriolis reaction. U.S. Patent Nos. 4,127,028 and 4,187,721 show optical switches mounted on opposing legs of a cantilevered U-shaped conduit. The optical switches produce signals in response to the applied oscillation with the time differential being proportional to the mass flow rate through the flow tube. U.S. Patent No. 4,422,338, as well as others, shows continuously varying sensor signals on a Coriolis type flow meter where the mass flow rate is determined as a function of the time separation of the sensor signals with respect to the passage of the flow tube through the mid-plane of oscillation.

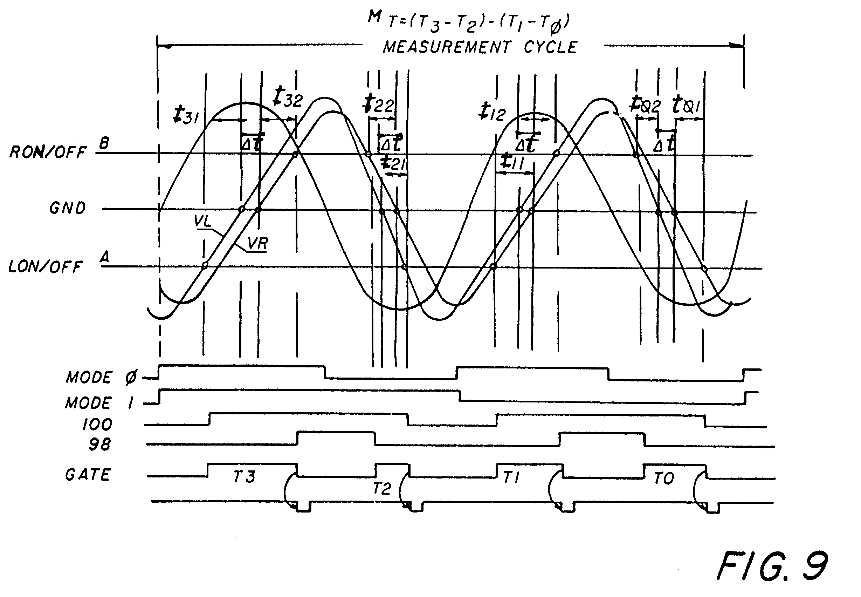

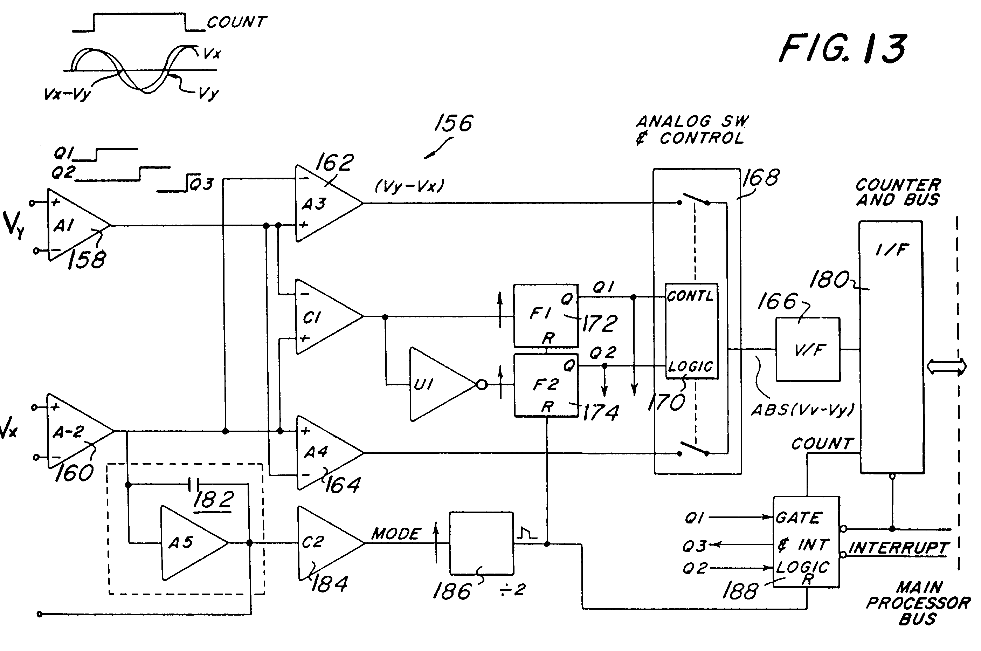

WO-A-86/00699 shows in Figure 13 optical sensors, including a mirror on the flow tube and a sensor-receiver on the opposite flow tube. A summation of the sensor signals in derivation of the mass flow calculations from the Coriolis force is performed continuously. Continuous subtraction of sensor signals is also utilized in the Coriolis force-mass flow calculation. Fig 9c shows an arrangement in which the difference between velocity sensor outputs is integrated to obtain a difference in position.

The problem to be solved is to yield a measure of the total energy input to the flow tube by the Coriolis force over the course of a complete cycle. This measure can serve to derive the mass flow through the conduit.

### Summary of the Invention

The problem is solved by applying Coriolis mass flow meters according to the claims 1, 14 or 15. The common principle of processing absolute values of amplitude differences is given in method claim 16.

The present invention relates to sensors and circuitry for the determination of the mass flow rate of a fluid within a conduit by means of the Coriolis reaction to the applied oscillation. The present invention particularly relates to the sensor structure and electronic interface within a dual conduit structure type Coriolis mass flow meter, although any type structure may be utilized. The sensors preferably produce a continuous linear output which may be related to the motion of the conduit. The contemplated sensors include either a coil and magnet type structure or optical type sensors in various forms. The circuitry or interface between the sensors and the processor as contemplated may also take a number of forms. The output of the sensors and the type of interface will greatly effect the method by which the sensor signals are processed to determine the mass flow rate.

One embodiment of the sensor structure of the present invention includes an optical type system having a light emitter and receiver which are either mounted adjacent or directly on the conduit tubing. When the emitter and receiver are mounted adjacent the tubing, the motion of the conduit varies the relative intensity of the signal received by the receiver by the movement of reflective structures mounted on the conduits. The light emitter and receiver may also be mounted directly to the tubing with the conduit motion of the two adjacent and parallel tubes varying the relative intensity of the signal received due to the variation of the alignment of the two structures during the conduit movement. Sensors are placed on opposite sides of the applied oscillation of the conduit. This oscillation produces a Coriolis reaction in opposing directions, with the comparative signal output from the sensors being determined by appropriate circuitry.

The sensor structure of the present invention also contemplates the use of magnet and coil type continuous output sensors. These type sensors preferably include a square magnet and a square coil such that the overlap of the two portions is related to the area of the overlapping squares. This structure produces a signal output which closely defines a sinusoidal curve. The sinusoidal shape of the signal output relates to the fact that the variation in overlapping portions of the sensor is a linear function of the conduit motion and the voltage output is directly proportional to the velocity of the sensor portions.

One embodiment of the electronic interface of the mass flow mater as contemplated by the present invention processes the continuous linear output of the sensor signals and generates a timing gate related to the motion of the conduit tubes. The duration of the signal gate from the sensors and the output of the interface is proportional to the phase difference of the output of the two relative sensors on opposite sides of the applied oscillation. Additionally, the interface will calibrate the sensor signal to remove errors in the signals substantially simultaneously with the calculation of the mass flow and the flow direction data.

One method of processing the signals from the sensors and its associated interface for performing this processing may also be related to the distributed Coriolis reaction acting over each oscillation cycle and its input energy to the resilient flow tube which over time is proportional to the integrated force and resultant deformation of the flow tube. The total difference between the outputs of the two sensors over a cycle can be thought of as the total or integrated work input per cycle which is added to deflect the conduit due to the effect of the distributed Coriolis react ion force over the length of tubing. The determination of the work input to the flow tube within the Coriolis mass flow meter may be made by digitizing the output of the continuously variable sensor signals, utilizing analog signal sensors, or mixing a combination of the analog and digitized signals which are then summed or integrated to yield total energy input per unit cycle.

For purposes of illustrating the invention, there is shown in the drawings a form which is presently preferred; it being understood, however, that this invention is not limited to the precise arrangements and instrumentalities shown.

**Brief Description of the Drawings**

Figure 1 shows a dual tube type conduit structure as contemplated for use with the present invention.

Figure 2 shows one embodiment of a sensor structure as contemplated by the present invention.

Figure 3 shows a second view of the embodiment of the sensor structure as shown in Figure 2.

Figure 4 shows another sensor structure embodiment as contemplated by the present invention.

Figure 5 shows an embodiment of a photo-signal processing circuitry as contemplated for use with Figures 2-4.

Figure 6 shows an embodiment of an electronic interface circuitry for receiving and processing the signal output from the flow meter sensors.

Figure 7 shows the output of the flow meter sensors and the electronics interface shown in figure 6.

Figure 8 shows another embodiment of an electronics interface for receiving and processing the signal output from the flow meter sensors.

Figure 9 shows the output of the flow meter sensors and the electronics interface as shown in figure 8.

Figure 10 shows another embodiment of a sensor structure as contemplated by the present invention.

Figure 11 shows a simplified version of the wave forms generated by the sensors associated with the mass flow meter illustrated in figure 1 or the sensor structures illustrated in figures 2, 3 and 10.

Figure 12 shows another embodiment of an electronics interface for determining mass flow.

Figure 13 shows an alternate form of electronic interface illustrated in figure 12.

Figure 14 shows another alternate form of the electronics interface illustrated in figures 12 and 13.

Figure 15 shows a typical sample process for sample and hold conversion as contemplated by the present invention and particularly the embodiments as illustrated in figures 12-14.

**Detailed Description of the Drawings**

In the figures where like numerals indicate like elements there is shown an example of a dual tube mass flow meter conduit of the type contemplated for use with the present invention. However, the conduit contemplated by the present invention may take any form as desired.

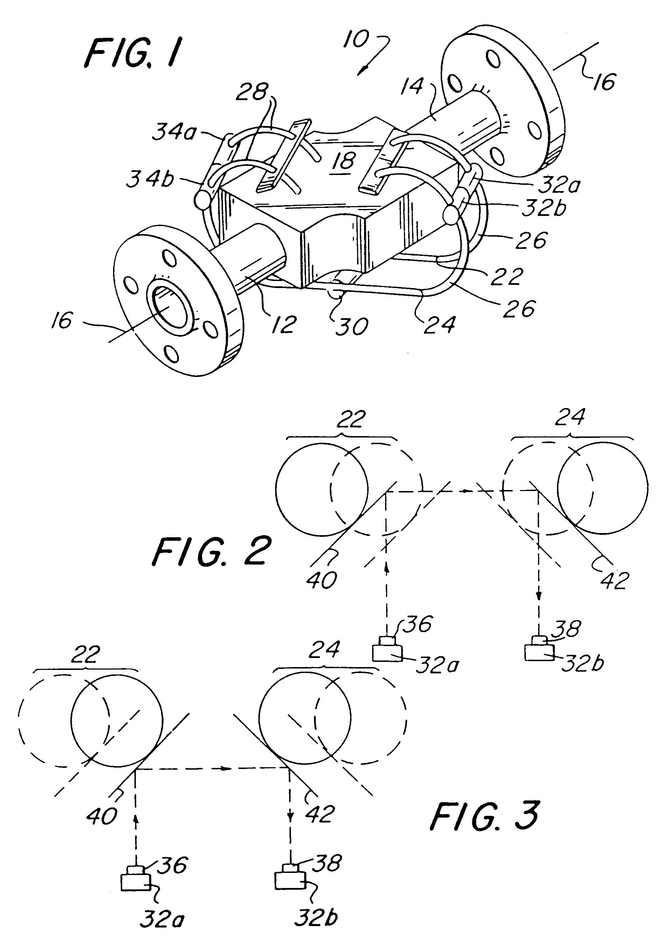

The conduit in the figures is generally referred to by the numeral 10 and, as shown in Figure 1, comprises an inlet 12 and an outlet 14 which connect the flow meter conduit 10 to a pipeline or other defined fluid stream (not shown). The inlet 12 and outlet 14 lie substantially along a straight line 16 and the conduit 10 is formed symmetrically about the axis 16.

The conduit 10 generally includes two flow tubes 22 and 24 which are positioned adjacent and parallel one another substantially through their entire length. The inlet 12 directs the flow from the defined fluid stream into a housing 18 which splits the incoming flow into two equal portions. The housing directs the flow into the two flow tubes 22 and 24. The flow is converged after exhausting from the flow tubes 22,24 back into housing 18, is directed into the outlet 14 and is returned to the fluid stream. The two flow tubes 22,24 emerge from the housing 18 to form a first loop 26, pass closely adjacent the housing 18 and axis line 16 and form a second loop 28 which terminates at the housing 18 proximal to their entrance end on the housing 18. The oscillatory motion of the flow tubes 22, 24 is created by driver 30 which is preferably positioned at the center of the length of tubing and drives the flow tubes 22 and 24 in opposing directions transverse to the flow therein.

Sensors 32, 34 are provided on each of the loops 26 and 28 respectively. Sensor 32 on loop 26 is indicated by the numerals 32a and 32b while the sensor 34 on loop 28 is indicated by the numerals 34a and 34b. The portions of sensors 32 and 34 are positioned adjacent to one another such that the movement of each flow tube 22 and 24 may be measured relative to one another. In Figure 1 the sensors are generally shown as black boxes with their particular structure being identified in the embodiments shown in Figures 2-4 and 10.

The embodiment of the sensors shown in Figures 2-4 and 10 will generally be described as the structure of sensors 32a and 32b. However, it should be understood that sensor pair 34a and 34b, generally correspond to the same or similar type structure.

In Figures 2 and 3 the flow tubes 22 and 24 are illustrated to show their relative motion in response to the oscillation applied by driver 30. The relative motion of the conduits 22 and 24 is in the opposite mode, that is, in the opposite direction at any particular time. The sensor structure 32a and 32b as generally shown includes a photo emitter 36 and a photo receiver 38. On each of the flow tubes 22 and 24 is mounted a mirror or other reflective surface 40 and 42, respectively. The position of the photo emitter 36 and photo receiver 38 is fixedly made by any convenient means so as to be spaced from and adjacent the flow tubes 22, 24. The emitter 36 and receiver 38 may be of any convenient type such as fiber optic composite bundles which may receive and transmit any type of infralight source. A typical manufacturer of the sensors 32, 34 as contemplated by the present invention are manufactured by EOTec Corporation.

As illustrated in Figures 2 and 3 the oscillation of the flow tubes 22,24 vary the position of the mirrors with respect to one another. The mirrors 40 and 42 are angled with respect to the light beam produced and received by the emitter 36 and receiver 38, respectively. The relative deflection of the tubing varies the distance and the intensity of the beam received. Thus the signal received from the receiver varies depending on the position of the flow tubes 22,24. The light beam which is shown generally by dotted lines, when the flow tubes 22, 24 are moved toward one another by the driver (as shown in Figure 3), travels a much shorter distance than when the flow tubes 22,24 are oscillated away from one another (as shown in Figure 2). The photo receiver 38 is generally sensitive to the fluctuation in the intensity of the light beam received from the photo emitter 36. The intensity of this received light beam will be directly proportional to the distance of travel between the photo emitter 36 and receiver 38. Since the position of the flow tubes 22 and 24 varies the distance of travel, the signal created by the photo receiver 38 will vary with respect to the position of the flow tubes 22 and 24.

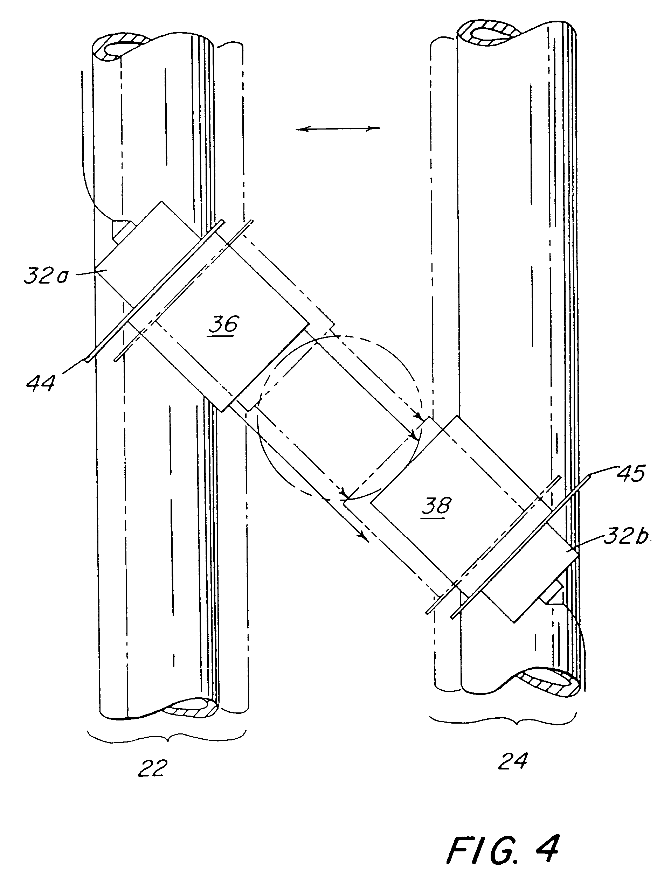

The sensor structure 32a and 32b as shown in Figure 4 generally comprises a photo emitter 36 and a photo receiver 38 which are mounted directly to the flow tubes 22,24. Attachment is made by mounting plates 44, 45 which are fixed directly to the opposing flow tubes 22, 24. The relative position of the emitter 36 and the receiver 38 may be set in any alignment when in the rest position. The alignment between the emitter 36 and receiver 38 will vary with the motion of the flow tubes 22, 24 in response to the driver motion. The relative intensity of the light beam being received by the receiver 38 will also vary with respect to the position of the flow tubes 22, 24. Thus, the signal output from the sensors will vary with respect to time and take the form of a wave signal similar to that produced by a structure shown in Figures 2 and 3. The sensors 32, 34 may be of any type optical system including those as previously mentioned above.

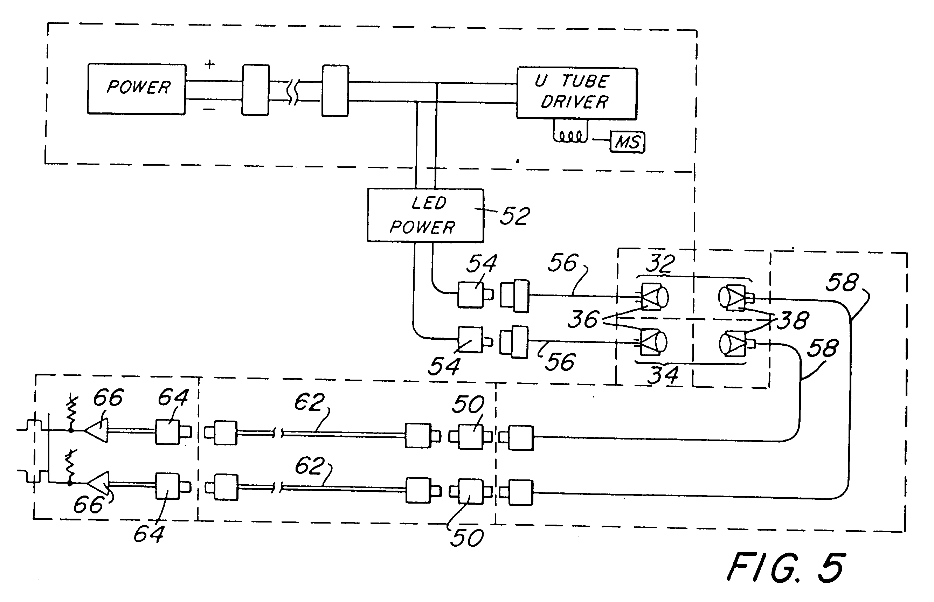

Figure 5 shows a circuit for transferring the signals output from the sensors 32, 34. The light source may be any known LED type source 54. A separate light source 54 may be provided for each of the sensors 32 and 34 or the output of a single light source may be divided into two separate cables through a splitter. Light sources 54 may be powered in any conventional manner 52. Source 54 produces a constant intensity light signal which is conveyed along a fiber optic cable 56 and input into emitter 36. Receiver 38 is preferably positioned adjacent to the emitter 36 and receives light from emitter 36. The intensity of the received light varies as a result of the relative movement of the flow tubes 22 and 24. The receiver 38 focuses the received light beam and transfers it through fiber optic cable 58. Cable 58 terminates in a fixed connector 50 which may be attached directly to the conduit housing (not shown). Cable 58 is connected to a connecting block 50 which receives the light signal from cable 58 and produces an identical or substantially similar optic signal at its output. Connecting block 50 may then be connected to long distance fiber optic cable 62 preferably having low loss over its length. The output end of the low loss long distance fiber cable 62 is connected to a PIN diode analog receiver 64, whose output forms the input signal to a differential comparator 66. The PIN diode receiver 64 acts as an amplifier and creates a linear output signal which is electronic rather than optical. The output of the PIN diode receiver 64 is thus an electronic signal whose amplitude varies as a function of the variation in intensity of the light signal received by receiver 38. The output of the comparator 66 may be connected to an electronic interface for further processing and then to a microprocessor for calculation of the mass flow rate.

By providing a fiber optic structure rather than a purely electronic structure, the problem of electrical or magnetic noise which may affect the signal produced by magnetic or electrical sensors is essentially eliminated. Additionally, fiber optics may be mounted adjacent to the flow tube (embodiments shown in Figures 2 and 3) such that the fiber optic emitter 36 and receiver 38 are not subject to the vibrations of the flow tubes 22,24 and, therefore, are essentially free of vibrations effecting the flow tubes. The positioning of the sensor 32 and 34 away from the conduit tubes also permits the positioning of the output signal cables 58 separate from the vibrating flow tube. Therefore this structure is also free of continuous stress variations.

Another typical problem associated with purely electronic signal sensors is the fact that the structures which may be in the area of the flow meter conduit which produce a magnetic field or an electrical flux. Such electrical flux may cause interference in the signal received by the electrical or magnetic sensors on these known designs. Additionally, the use of low loss, long distance fiber cable 62 which connects to the communication block 50 and output cables 58 permit the placement of the optical-to-electronic signal converter at some distance away from the actual position of the flow meter or conduit 10. This type structure was heretofore unavailable since significant line loss would be found in typical structures which utilize an electric signal passing over a wire. Such line loss would cause substantial variations in the calculation provided by the signal due to imprecise control over the potential line loss along the length of the wire.

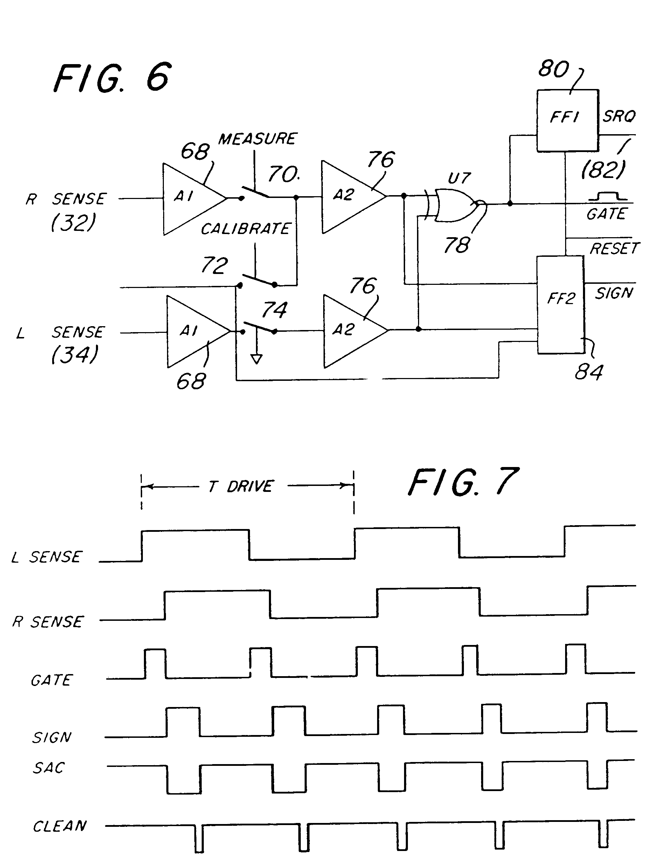

In Figure 6, an embodiment of an electronic interface is shown which receives the signal from the circuitry of Figure 5 or any type sensor signal and directs it into the microprocessor (not shown) which calculates the mass flow as a function of the sensor signals. The block diagram of the interface shown in Figure 6 may be operated in one of two modes, a measurement mode and a calibrate mode, which may be performed alternately during the processing of the mass flow signals. The purpose of the electronic interface circuitry is to generate a timing gate and other signals, described further below, that enable the processing electronics to resolve calibration and flow direction data. The duration of the timing gate signal is proportional to the time difference, or phase shift, of the output of the two sensors 32 and 34 and is a measurement of the time difference between the reaction of conduits 22 and 24 sensed by sensor 32 on the input side of the driver 30. The relative time difference between the reactions is proportional to the mass flow through the conduit. It should be noted that the time differential is only one contemplated means of calculating the mass flow in this type flow meter. The output of velocity sensors, such as those described above, may be compared in any desired manner as described herein. The following is a description of an electronic interface for processing the continuous sensor signals for making the mass flow calculation.

The electronic interface shown in Figure 6 comprises right (R) and left (L) channels. These designations are arbitrarily chosen to refer to sensors 32, 34 or to the motion of loops 26 and 28, respectively. In Figure 6, the "R sense" input is that produced by the sensors 34. The R sense and the L sense signals are the outputs of the comparators 66 in each of the output lines as illustrated in Figure 5. Both of the signals from sensors 32 and 34 are first integrated and amplified by amplifiers 68. Switches 70, 72 and 74 are preferably electronic switches activated (closed) by a ground applied to a control pin. In the measurement mode, switches 70 and 74 are closed so that the amplified "R sense" and "L sense" signals from amplifiers 68 are applied to high gain amplifiers 76. The output of the high gain amplifiers 76 is essentially a square wave (see Figure 7) and is sent to an exclusive-OR circuit 78. As will be understood by those skilled in the art, exclusive-OR circuit 78 outputs a positive pulse of a duration equal to the time difference between edges of each square wave output of amplifiers 68.

As seen in the timing diagram in Figure 7, the pulse produced by exclusive-OR 78 has a pulse width exactly equal to the duration of the time difference, or the difference in the phase, of the two wave forms derived from the relative velocity sensors 32 and 34. When this gate signal is high, it enables clock pulses generated by a precision frequency source (not shown) to be accumulated in a 20 bit counter (not shown). Circuits for generating clock pulses and for accumulating pulses in a counter are known, and need not be described in detail here. The specific count of the clock pulses will precisely define the duration of the pulse width of the gate signal and hence the time, or phase difference, between the "R sense" and "L sense" signals. The precision frequency source runs at a precisely known frequency and will not be affected by relative signal variation or variations in supply current.

The falling edge of the gate signal triggers a flip flop 80, setting an interrupt signal 82. The interrupt signal 82 initiates action in the microprocessor (not shown) to read the counters (not shown) and other data latched in the interface circuitry at the end of the measurement cycle.

A second flip flop 84 provides a "SIGN" pulse to indicate which of the "R sense" and "L sense" signals occurs first in time. Flip flop 84 is enabled by the phase of one of the sensors. The left one was chosen in the circuitry shown out of convenience. While flip flop 84, is enabled, the other sensor may or may not change logic state. Whichever occurs will set or not set the flip flop 84, thus setting the "SIGN FLAG" signal which will indicate whether "L sense" lead or lags "R sense". This will enable the microprocessor to directly determine which way the liquid is moving through conduits 22 and 24 (whether "L sense" leads or lags "R sense").

The calibrate mode operates in a manner similar to that discussed above for the measurement mode, but instead of the time difference between the two sensors the apparent time difference generated between the left and right channels by the circuitry itself is measured. In the calibrate mode, switch 70 is opened and switches 72 and 74 are closed, applying the left sensor signal "L sense" to both channels. The switches are operated automatically by the microprocessor. In this mode, any time difference will be due to delays introduced by the circuitry itself. These delays may be aggravated by temperature and component aging, and may lead to errors in the width of the gate signal. These errors may be calculated in the same manner as measured time differences and added to or subtracted from the measured time differences in order to null out their effect. Normal measurement are conducted for about fifty cycles of sensor signals, followed by operation in the "calibrate" mode for about fifty more cycles. Thus, "calibration" can be done about twice very second. By calibrating on a continuous basis the phase errors can be remembered by the microprocessor and their effect compensated for by removing it from the final calculations of mass flow.

It should be understood that, although the terms "calibrate" and "calibration" are used herein for convenience, the circuit of Figure 6 is not calibrated in the sense of making it con form to a fixed reference. Rather, the circuit of Figure 6 compensates for errors by sensing the errors and taking them into account when resolving mass flow. The net result is the same as periodically calibrating the circuit in the strict sense, although the mechanism is different.

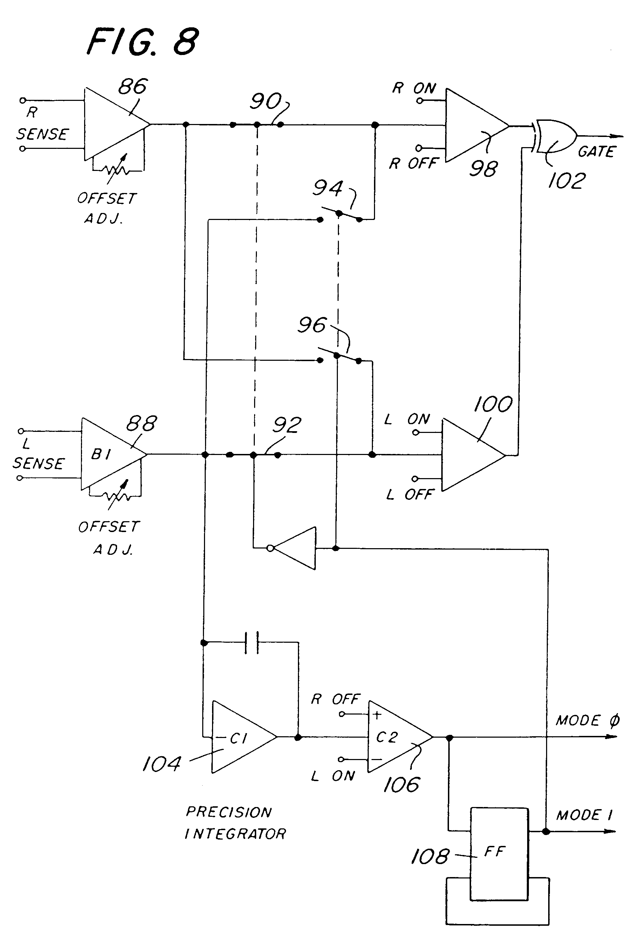

Figure 8 illustrates an alternate electronic interface. As with the embodiment shown in Figure 6, the interface of Figure 8 will generate a timing gate, the duration of which is proportional to the time, or phase, difference of the output of the two relative velocity sensors. The interface will also generate the gate signal in such a manner that the flow direction will be resolved directly and the signal proportional to mass flow will be free of errors and provide higher resolution of the phase difference.

The interface of Figure 8 operates in either of two modes. In the first mode, the "R sense" and "L sense" signals are applied to the inputs of amplifiers 86 and 88, respectively. Amplifiers 86 and 88 amplify the "R sense" and "L sense" signals received from sensors 32 and 34. The time difference, or phase difference, in the signals received from each sensor is proportional to the mass flow but includes certain error that arise from small differences in each channel. The outputs of amplifiers 86 and 88 are applied to switches 90 and 92, respectively. Switches 90 and 92 may be electronic switches which are activated (closed) by a ground applied to a control pin. The outputs of amplifiers 86 and 88 are also applied to switches 96 and 94, respectively. Switches 94 and 96 may also be electronic switches identical to switches 90 and 92.

In the first mode of operation of the circuit of Figure 8, switches 90 and 92 are closed and switches 94 and 96 are open. Thus, the "R sense" signal from sensor 32 is applied to comparator 98, and the "L sense" signal from sensor 34 is applied to the input of comparator 100. Comparators 98 and 100 may be set to generate an output pulse when the input exceeds preselected on and off limits. The outputs of comparators 98 and 100 will be square waves and are applied to exclusive-OR function 102. As will be understood by those skilled in the art, exclusive-OR function 102 outputs a positive pulse of a duration equal to the time difference between the edges of each square wave output of comparator 98 and 100. While block 102 performs an exclusive-OR function it must take care of the condition where there may be electrical noise on each edge of the comparator signal. Therefore, the "Comparator On" condition is latched until the next comparator level is exceeded. Similarly, the resetting is latched until the next comparator event occurs.

As can be seen in the timing diagram in Figure 9, the pulse, or gate signal, produced by exclusive-OR function 102 has a pulse width proportional to the duration of the time difference, or the difference in the phase, of the two wave forms derived from the relative velocity sensors 32 and 34. When the gate signal is high, it enables clock pulses generated by a precision frequency source (not shown) to be accumulated in a counter (not shown), exactly as described in connection with the interface shown in Figure 6. The falling edge of the gate signal triggers a flip flop in the counter (not shown), thereby generating an interrupt signal, designated in the timing diagram as into. The interrupt signal initiates action in the microprocessor to read the counters (not shown) and other data latched in the interface circuitry at the end of the measurement cycle.

In Figure 9, waveforms $V_L$ and $V_R$ show the variation in the position of the emitter 36 and receiver 38 relative to each other as a function of the intensity output of the signal. As can be seen, the waveforms are substantially sinusoidal but each waveform varies in amplitude from the other as is typical in practice. Furthermore, output is variable in a fixed curve such that even if misalignments of the sensors are found the relative variation will be substantially uniform.

The interface circuit of Figure 8 also generates MODE 0 and MODE 1 signals, which are used to inform the microprocessor about the state of the current measurement cycle. The various states of the measurement cycle are shown in Figure 9. When an interrupt signal occurs during state 3, MODE 0 and MODE 1 will both be high. When that occurs, the microprocessor will read out only the contents of the counter (which represents the time difference or phase shift T3), store it and clear the counter. When the interrupt signal occurs during state 2, the MODE 1 signal will be high and the MODE 0 signal will be low. When that occurs, the microprocessor reads out the content of the counter (which is equal to time difference T2 shown in Figure 9), subtracts it from from the previous counter (T3), stores the result and clears the counter. The result is then used by the microprocessor to calculate mass flow rate.

In the second mode of operation of the electronic interface shown in Figure 8, switches 90 and 92 are opened and switches 94 and 96 are closed. Thus, the output of amplifier 86 is connected to the input of comparator 100 and the output of amplifier 88 is connected to the input of comparator 98. Other than that change, in the second mode of operation the circuit operates in manner identical to operation in the first mode. However, when the interrupt signal occurs during state 1, the MODE 1 signal will be low and the MODE 0 signal will be high. When that occurs, the microprocessor will read out the content of the counter (which represents the time difference T1) store it and clear the counter. When the interrupt occurs during state 0, both the MODE 1 and MODE 0 signals will be low. When that occurs, the microprocessor reads out the content of the counter (which represents time difference T0), subtracts it from T1, stores the result and clears the counter. The difference is also used by the microprocessor to generate the mass flow rate.

The following phase difference will be a count value four time greater than the count value that would be found by conventional means. In addition, the direction of flow will be found from the final sign of the operation in the microprocessor and will be free from minor differences in the circuitry and sensor outputs. The explanation for this is as follows.

In the following description the designation "t" indicates a time which is not actually measured by the contemplated circuitry. The indication of a time which is actually measured is designated by a "T". The subscript for these time designations are as follows: "$t_{xy}$", where "x" is an indication of, the state of comparators 98 and 100 and "y" is an indication of the start/stop of a sensor A or B, where A and B are the referred to controlling electronics channels ("y" equal to 1 indicates a start/stop by sensor A and "y" equal to 2 indicates a start/stop by sensor B). These designations will become more apparent by the following description and by reference to Figure 9.

By examining Figure 9 it can be seen that the gate duration $T_3$ is made up of:

(1)    $T_3 = t_{32} + t_{31} + \Delta t$

Likewise, the other gate durations can be found:

(2)　　$T_2 = t_{22} + t_{21} - \Delta t$

$T_1 = t_{12} + t_{11} - \Delta t$

$T_0 = t_{01} + t_{01} + \Delta t$

Next the sensor wave forms can be represented by the following:

(3)　　$L = V_L \, Sin \, \omega \, t + V_{LO}$

$r = V_r \, Sin \, \omega \, (t - \Delta t) + V_{RO}$

Where $V_L$ and $V_r$ may be different magnitudes offset by two different voltage levels $V_{LO}$ and $V_{RO}$.

Since we know $\omega$, the excitation frequency, and the reference voltages used by the comparators A, B we can find each actual time period component as follows:

$$(4) \quad t_{32} = \frac{1}{\omega} \, Sin^{-1} \left| \frac{B - V_{RO}}{V_R} \right|$$

$$t_{31} = \frac{1}{\omega} \sin^{-1} \left| \frac{A - V_{LO}}{V_L} \right|$$

$$t_{22} = \frac{1}{\omega} \sin^{-1} \left| \frac{B - V_{RO}}{V_R} \right|$$

$$t_{21} = \frac{1}{\omega} \sin^{-1} \left| \frac{A - V_{LO}}{V_L} \right|$$

$$t_{12} = \frac{1}{\omega} \sin^{-1} \left| \frac{B - V_{LO}}{V_L} \right|$$

$$t_{11} = \frac{1}{\omega} \sin^{-1} \left| \frac{A - V_{RO}}{V_R} \right|$$

$$t_{02} = \frac{1}{\omega} \sin^{-1} \left| \frac{B - V_{LO}}{V_L} \right|$$

$$t_{01} = \frac{1}{\omega} \sin^{-1} \left| \frac{A - V_{RO}}{V_R} \right|$$

Using these time calculations, the errors associated with the actual time measurements ("T") can be written.

The variation in turn on time for the A comparator level may vary by an amount $t_a$ and for B by the amount $t_b$. Therefore, the actual time period calculations are void of errors as seen by the following calculations:

$$(5) \quad T_3 = T_3' + t_b - t_a$$
$$T_2 = T_2' + t_a - t_b$$
$$T_1 = T_1' + t_b - t_a$$
$$T_0 = T_0' + t_a - t_b$$

where the prime designation (e.g. $T_3'$) indicates a time period where the errors in the sensor signal due to amplitude or offset changes have not yet been removed.

If $T_c$ is the time required for the waveform to change from one comparator level (A) to the other (B), then:

EP 0 275 367 B1

(6)   $T_3 = t_c + \Delta t$
$T_2 = t_c - \Delta t$
$T_1 = t_c - \Delta t$
$T_0 = t_c + \Delta t$

Solving forward $\Delta t$ and adding these equations together provides the following:

(7)   $t_c - \Delta t - t_c - \Delta t - t_c - \Delta t + t_c - \Delta t = - 4 \Delta t$

or,

(8)   $(T_3 - T_2) - (T_1 - T_0) = 4 \Delta t$

Which is independent of the channel errors $t_a$ and $t_b$ and whose direction is given by the sign of the result. Futhermore, the measurement $\Delta T$ has 4 times the resolution of a single measurement. Thus, if the circuitry is utilized to calculate $T_3$, $T_2$, $T_1$, $T_0$, the calculations can be written so that measured time ($M_T$) = 4 $\Delta t$ and then

(9)   $M_T = T_3 - T_2 - T_1 + T_0$

Now $T_3$ only depends on $t_{32}$, $t_{31}$ and $\Delta t$, and from the expressions for $t_{32}$ and $t_{31}$, it can be seen that there is a dependency only on the ratio of B to $V_R$ for $t_{32}$ and A to $V_L$, so that as long as A and $V_L$ are in constant ratio and the offset for $V_L$ is constant and similar conditions are met for B, $V_R$, and $V_R$'s offset have a constant ratio, the amplitudes of $V_L$ and $V_R$ may vary from each other. Similarly A and B may vary from each other. Similarly A and B may vary from each other. Completing the expression for $M_T$ yields:

(10)   $M_T = t_{32} + t_{31} + \Delta t - t_{22} + t_{21} + \Delta t - t_{12} - t_{11} + \Delta t + t_{02} + t_{01} + \Delta t$
$M_T = 4 \Delta t + (t_{32} - t_{22}) + (t_{31} - t_{21}) + (t_{02} - t_{12}) + (t_{01} + t_{11})$

Where $(t_{xx} - t_{yy})$ are reduced to zero when $t_{xx}$ and $t_{yy}$ are substituted with the $1/\omega$ $\text{Sin}^{-1}$ | | expressions, equations (4) therefore:

(11)   $M_T = 4 \Delta t$ Less any dependency on $V_L$, $V_R$ and A, or B.

By operating in the two modes described above, the circuit compensates for errors introduced as a result of variations in component tolerances and variations in operating parameters due to temperature changes. It will be understood that, by reciprocally alternately applying the sensor signals to comparators 98 and 100, any error introduced by the circuit components with respect to the other signal. This compensates for errors introduced by the circuitry by averaging out the error between the left and right channels.

Switches 90, 92, 94 and 96 are controlled by the MODE 1 signal. The MODE 1 signal is generated by precision integrator 104, comparator 106 and flip flop 108. The input to precision integrator 104 is the amplified "L sense" signal from amplifier 88. The output of integrator 104, labeled INT in the timing diagram of Figure 9, is applied to comparator 106. Comparator 106 is arranged to turn on and generate a positive output when the output of integrator 104 exceeds a predetermined positive value and turn off when the output of integrator 104 exceeds a predetermined negative value. The output of comparator 106 is the MODE $\emptyset$ signal. The MODE $\emptyset$ output of comparator 106 is also applied to flip flop 108, which is arranged as divide-by-two circuit. The output of flip flop 108 is the MODE 1 signal which, as shown in the timing diagram, is a square wave of half the frequency of the MODE $\emptyset$ signal. The MODE 1 signal thus alternately activates switches 90 and 92, and switches 94 and 96, respectively, during the measurement cycle.

It can be seen by inspecting Figure 9 that it is desirable that there should be a minimum in distortion in each quadrant of the measurement cycle. That is

(12)   $T_{31} = T_{21}$
$T_{32} = T_{22}$
$T_{11} = T_{01}$
$T_{12} = T_{02}$

10

This is assured if the waveforms are sinusoidal. Since the sensor velocity is sinusoidal, $V_L = \sin \omega t$. Then the conversion of velocity to voltage must be linear. For a square coil and magnet the output voltage is given by

(13)     $V = N B \, dA/dx \cdot dx/dt$

Where $dx/dt = \sin \omega t$. $dA/dx$ is a simple linear function of the overlap of the magnet and coil.

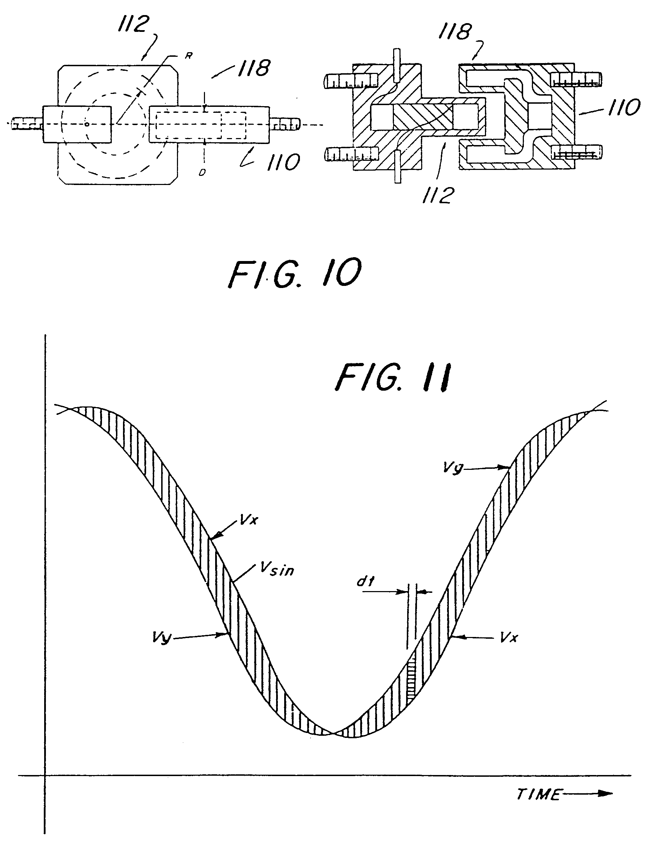

Figure 10 depicts a sensor 119 having a square magnet 110 and a square coil 112 whose radius R is much greater than the width of the magnet, D. The overlap of these two portions 110, 112 approximates the included area of two overlapping squares. The output of this type structure is purely sinusoidal since the included area is a linear function of the overlap. Thus, the voltage output of the sensor 118 is directly proportional to the velocity and the area of overlap of the sensor portions 110, 112.

In non-uniform overlap sensor configurations, such as round coils, the voltage output is a complex function of the overlapping area during movement of the two portions with respect to one another. This type structure causes signal distortions which may result in measurements which also distort the mass flow calculation. Sensors 118 produce a linear signal linearly proportional to the velocity of the flow tubes when properly mounted. Known sensors produce signals which are linear but not linearly proportional to this motion but rather proportional to the complex function of the area overlap during the movement.

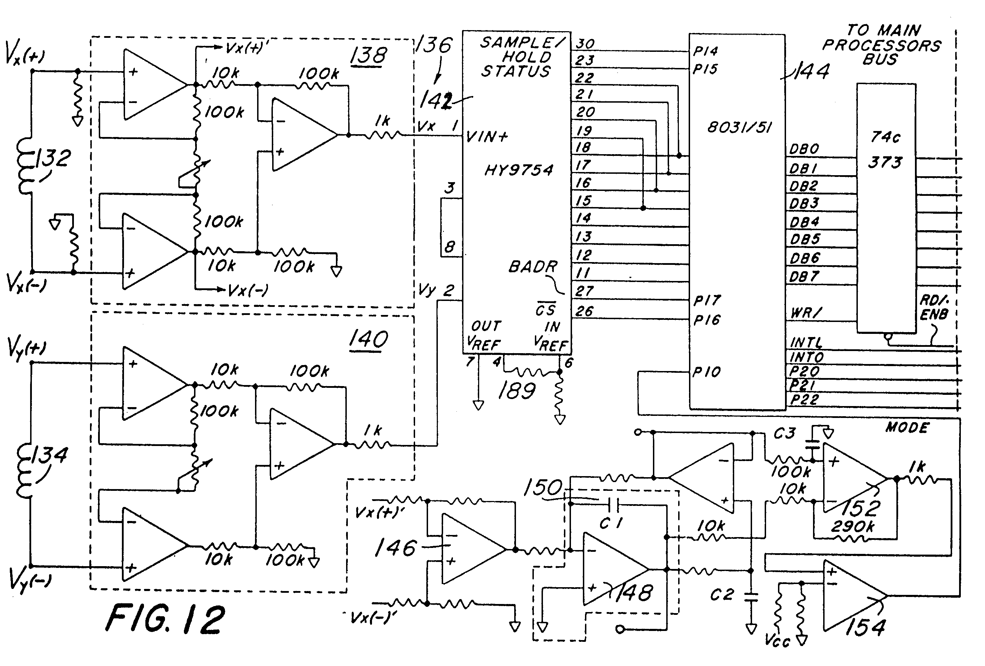

For purposes of describing Figures 11-15, the use of velocity sensors will be assumed, it being understood that the invention is not limited to velocity sensors, but includes displacement and acceleration sensors as well.

It is known that when a closed conduit, such as flow tube 22 or 24, is driven by a transverse periodic oscillation, Coriolis reaction forces will be produced by the fluid moving within the conduit. The Coriolis force will be distributed along the flow tube length in such a manner as to produce velocities which vary in time according to the driving oscillation and in phase according to the mass flow of fluid through the flow tube.

This distributed Coriolis force, acting over each oscillation cycle, inputs an amount of work to the flow tube proportional to the integrated, or total, force and the integrated, or total, deformation imparted to the flow tube structure by the driver. The deformation of the flow tube being periodic, mass flow will produce a continuous difference between two velocity sensors 32,34 located at discrete, spaced locations on the flow tube. It is assumed that velocity sensors 32 and 34 are of the coil/moving magnet type, although any suitable sensor may readily be substituted by those skilled in the art. The total difference in the signals produced by the velocity sensors over a cycle, being the result of an integrated force and distance, can be though of as the energy input per cycle to the flow tubes 22, 24 from the distributed Coriolis force. Mass flow is directly proportional to the total energy input per cycle from the distributed Coriolis force.

As already noted, sensors 32 and 34 generate output signals representative of relative velocity of flow tubes 22, 24 at the points at which the sensors are located. Figure 11 illustrates the output signals of two velocity sensors, arbitrarily positioned on the loops 26, 28 of the adjacent flow tubes 22, 24. The signals from each sensor will be referred to hereinafter as $V_x$ and $V_y$ for purposes of figures 11-15.

Figure 11 illustrates the velocity signals $V_x$ and $V_y$ for one oscillation cycle for an arbitrarily-chosen mass flow rate. The vertical lines designated $V_{sin}$ represent the instantaneous amplitude difference in the velocity signals from each sensor, i.e., $V_x - V_y$, at different points in time. Adjacent pairs of vertical lines also define an interval dt. As shown in Figure 11, an oscillation cycle may be divided into a number of intervals dt which may or may not be equal. The area of each interval between the curves of $V_x$ and $V_y$ represents an amount of energy input to the conduit during that interval. The total area for all intervals, and hence the total area between the two curves $V_x$ and $V_y$, represents the total energy input to the flow tube by the Coriolis force over the course of a complete cycle. The area for a single cycle can be determined from the following formulas:

(14a)     $\text{Area } A = \int |V_x - V_y| \, dt$

or, since dt will be a constant representing the sampling interval, the area can be expressed as

(14b)     $\text{Area } A' = \Sigma |V_x - V_y|$

where $\Sigma$ is the summation of a complete cycle.

The mass flow M can be determined from the formula:

(15)   $M = K_a A$

where $K_a$ is a constant and A or A' equals the area determined by equations (14a) and (14b) above. Constant $K_a$ can be found by calibration and, if a constant interval dt is used, mass flow can then be found according to the formulas:

(16a)   $M = K_a \int |V_x - V_y| \, dt$

or

(16b)   $M = K \Sigma |V_x - V_y|$

where K equals $K_a dt$ and $\Sigma$ is the summation of a complete cycle.

One form of circuit 136 for determining mass flow in accordance with the present invention is shown in Figure 12. Velocity signals from velocity sensors 32 and 34, designated $V_x$ and $V_y$, may be taken from the output of their coils in any known manner. As shown in Figure 12, it is preferred that the velocity signals $V_x$ and $V_y$ are taken across the terminals of the sensing coils of sensors 32 and 34, so that $V_x$ and $V_y$ are in the form of differential signals. As shown in the schematic of Figure 12, $V_x(+)$ and $V_x(-)$ represent the voltages at opposite terminals of the coil, isolated from ground, or "floating". The same is true for $V_y(+)$ and $V_y(-)$. The signals across sensor coils for sensors 32 and 34 are then sent to conventional instrumentation amplifiers 138 and 140, which generate single $V_x$ and $V_y$ signals, referenced to internal ground. Instrumentation amplifier 138 also generates $V_x(+)'$ and $V_x(-)'$ signals, sued to generate a MODE signal which will be described in greater detail below.

Velocity signals $V_x$ and $V_y$ are then sent to an A/D converter 142, where they are subtracted and converted to digital form. Internally of A/D converter 142, velocity signal $V_x$ and velocity signal $V_y$ form the inputs to a differential amplifier. The output of the differential amplifier is an analog signal representative of the difference between $V_x$ and $V_y$, and hence the A/D output is a digital signal representative of the difference between $V_x$ and $V_y$. The A/D converter output is sent to a microprocessor 144, which comprises the area of each interval between the curves for velocity signals $V_x$ and $V_y$ according to equations (14a) and (14b) set forth above. A suitable microprocessor 144 may be an 80C-31 or 80C-51. The area calculations are then sent to a main processor (not shown) for conversion into mass flow data in accordance with equations (14a) through (16b) above.

The $V_x(+)'$ and $V_x(-)'$ signals generated by instrumentation amplifier 138 are used to generate a MODE signal. The $V_x(+)'$ and $V_x(-)'$ signals are amplified in differential amplifier 146 and then integrated by amplifier 148 and capacitor 150. The output of the integrating amplifier 148 is thus a sinusoidal signal identical to $V_x$, but, since it has been integrated, is shifted in phase by 90°. The integrated velocity signal is then sent to amplifier 152 where it is processed into a square wave and sent to microprocessor 144 via buffer amplifier 154.

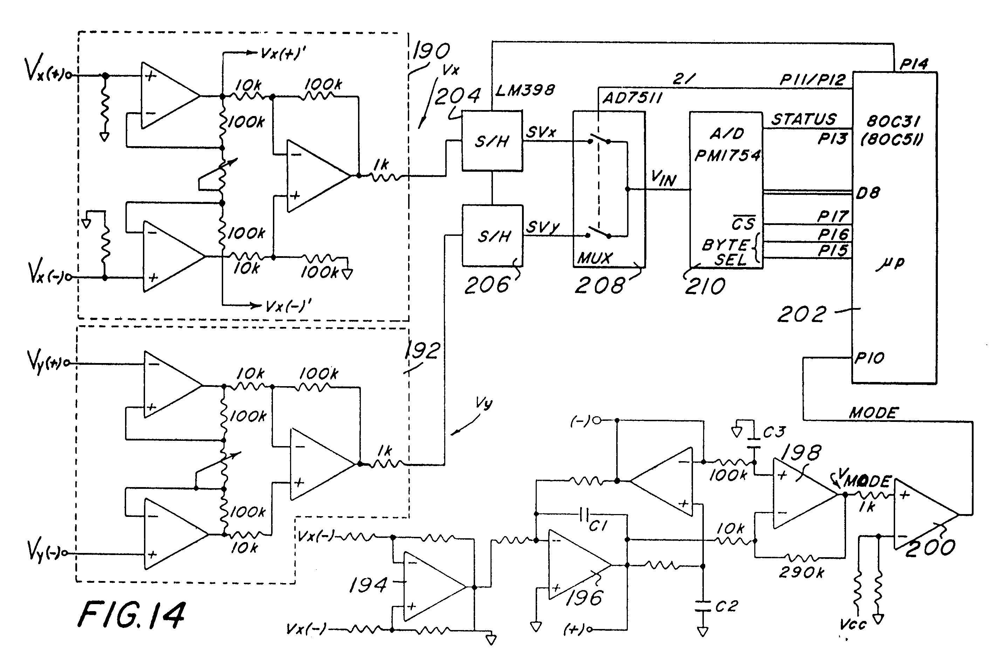

The MODE signal is used by microprocessor 144 as a timing signal for determining whether $V_x$ exceeds $V_y$ during either half of the MODE signal cycle. The processing of the signals will be discussed further in connection with Figure 14.

Figure 13 illustrates a non-processor based embodiment of a circuit according to the present invention. The circuit is referred to generally by 156, and comprises instrumentation amplifiers 158 and 160 which are essentially identical to instrumentation amplifiers 138 and 140 shown in Figure 12. The outputs of amplifiers 158 and 160 are sent to differential amplifiers 162,164. Differential amplifier 162 subtracts velocity signal $V_x$ and $V_y$, while differential amplifier 164 subtracts velocity signal $V_y$ from $V_x$. These subtracted signals are then sent to a voltage-to-frequency (V/F) converter 166 by means of analog switch 168, which is operated by control logic 170 in response to signals generated by flip flops 172, 174, invertor 176 and comparator 178. Comparator 178 provides clocking signals to flip flops 172 and 174 so that the control logic 170 operates analog switch 168 to connect the output of amplifier 162 to the V/F converter when the amplitude of velocity signal $V_y$ exceeds the amplitude of velocity signal $V_x$, and to connect the output of amplifier 164 to V/F converter 166 when the amplitude of velocity signal $V_x$ exceeds the amplitude of velocity $V_y$. In that manner, the input to V/F converter 166 will always be the absolute value of $V_x - V_y$.

The output of VF converter is a square wave whose frequency varies with the input voltage. Thus, the frequency of the output of V/F converter is representative of the absolute value of the difference between velocity signal $V_x$ and $V_y$. Expressed differently, the number of output pulses from V/F converter 166 in a given interval is representative of the absolute value of the difference between $V_x$ and $V_y$ to the interval. The pulses generated by V/F converter are accumulated in a counter 180, where they are available for processing (not shown), as in the embodiment of Figure 12.

As in Figure 12, a MODE signal is generated by integrator 82 and comparator 184. The MODE signal from comparator 184 is divided by two in divide-by-two circuit 186 and then sent to gating and logic circuit 188, where it is used as a timing signal for counter 180.

In Figure 13, the significant signal is the difference between $V_x$ and $V_y$. The absolute value of that difference must be totalized. One way of viewing this is to consider that the portion of the cycle where $V_x$ exceeds $V_y$ corresponds to absorption of work input by the sensor tubes, whereas the portion where $V_x$ is less than $V_y$ represents recovery of work from the tubing. The two should net out to zero.

However, to gain maximum resolution, the absolute difference of each half cycle is totalized. Actually, work is absorbed and recovered during each half cycle and the compliment happens during the next half cycle, but the effect is the same. Thus, although the total work will be zero in algebraic terms, its absolute value has meaning as total energy.

In Figure 13, the time for a complete cycle is represented by the signal COUNT. This is derived by dividing the MODE signal by two. In this representation, only every other cycle is totalized. The counter circuit could contain a set of data latches to take the data from the counter at the fall of the COUNT signal. This could bp followed immediately (compared to the length of time required for an entire cycle) by a reset to the counters and a re-enable of counting. Thus, data could be accumulated every cycle.

A third, and preferred, embodiment of a circuit according to the present invention is shown in Figure 14. Velocity signals $V_x$ and $V_y$ are generated by instrumentation amplifiers 190 and 192 which, as can be seen, are identical to instrumentation amplifiers 138 and 140 already discussed in connection with Figure 12. Also, as discussed in connection with Figure 12, the MODE signal is generated in differential amplifier 194, integrating amplifier 196, amplifier 198 and buffer amplifier 200. The MODE signal is used to provide a timing signal to microprocessor 202, which is essentially the same as microprocessor 144 shown in Figure 12.

Velocity signals $V_x$ and $V_y$ are sampled in sample and hold circuits 204 and 206, respectively. Both $V_x$ and $V_y$ are sampled at the same instant of time. The sampled values of $V_x$ and $V_y$ are then combined in analog multiplexer 208, and the combined signal, designated by $V_{in}$, is then sent to microprocessor 202 after being converted to digital form by A/D converter 210.

The absolute value of the difference between $V_x$ and $V_y$ is obtained from the sample values of $V_x$ and $V_y$, and is done in microprocessor 202. Microprocessor 202 may also be suitably programmed to obtain the sum of the samples of the area under each velocity curve $V_x$ and $V_y$ to determine whether the areas are equal, as ideally they should be. If the areas are not exactly equal, the microprocessor can calculate an amplitude correction factor to apply to either $V_x$ or $V_y$ to derive an amplitude-corrected signal, so that any difference between the amplitudes of $V_x$ and $V_y$ at a given point are due solely to the phase shift between $V_x$ and $V_y$, and not to amplitude differences.

Signal processing for the circuits shown in both Figure 12 and Figure 14 is essentially the same, except that in Figure 12 the subtraction between $V_x$ and $V_y$ is performed electronically in A/D converter 142 whereas in the circuit of Figure 14 the subtraction is performed in microprocessor 202.

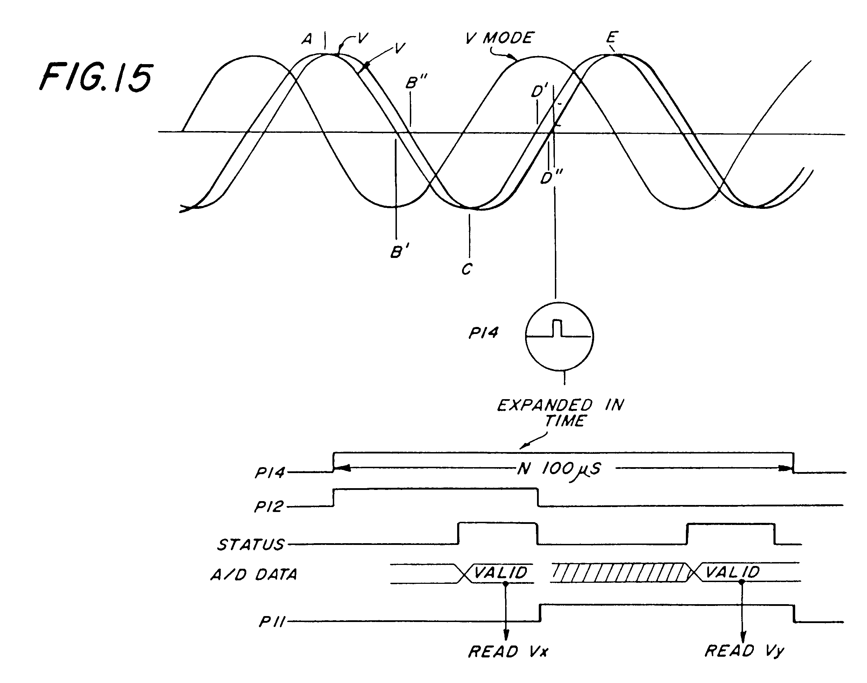

The fall of the MODE signal below 0 volts starts the signal acquisition process. Figure 11 depicts $V_x$ and $V_y$ as applied to the sample and hold circuits. Figure 15 shows a typical sample process which will be repeated at each vertical bar shown in Figure 11, as many times as samples are taken. The events for the acquisition process are the following:

(a) Microprocessor 202 raises the voltage at pin P14, which causes the sample and hold circuits 204 and 206 to stop tracking $V_x$ and $V_y$ and freeze their values at the inputs of multiplexer 208.

(b) The processor 202 addresses $V_x$ through the switch 208 by raising P12 and lowering P11.

(c) After a delay sufficiently long for an A/D conversion to take place, the STATUS line is polled to determine the actual time that the conversion is ready.

(d) The converted $V_x$ is read into $V_x$ memory in processor 202 indexed by a memory pointer into the $V_{mode} = 0$ or $V_{mode} = 1$ section of memory, as appropriate.

(e) P12 and P11 are reversed, selecting $V_y$ through analog switch 208.

(f) Step (c) is then repeated.

(g) The converted $V_y$ is read into $V_y$ memory, similar to step (d).

(h) P14 is now set to allow sample and hold circuits 204 and 206 to track $V_x$ and $V_y$, and the memory pointer is indexed.

(i) The MODE signal is monitored for a change of state in order to switch sections of the input data array and to terminate a complete cycle.

Thus, the data collection phase is completed for one cycle. Additional cycles are used for new measurements, or to increase the resolution of a single measurement, as required by the signal processing

13

phase.

Good performance can be achieved by using 14 bit A/D converter where only two to four samples per half cycle are taken. Slower speed and higher resolution may save hardware cost. Two A/D converters may be used, saving the analog switch 208 and associated potential errors with "droop" in the sample/hold outputs. This configuration enables simultaneous sampling of each waveform.

The present invention may be embodied in other specific forms without departing from the spirit or essential attributes thereof and, accordingly, reference should be made to the appended claims, rather than to the foregoing specification, as indicating the scope of the invention.

## Claims

1. A Coriolis mass flow meter comprising
   a flow tube oscillated transverse to the direction of flow and having sensors located on or adjacent the flow tube on opposite sides of the flow tube,
   the sensors generating signals representative of the motion of the flow tube, and
   means for generating from the sensor signals a signal representative of the mass flow through the flow tube, the signal generating means comprising
   means (142) for determining the instantaneous amplitude difference between the signals at a plurality of discrete and adjacent intervals,
   means (144) arranged to determine for each said interval the product of the absolute value of the instantaneous amplitude difference and the duration of the interval, and to determine the sum of the products of each interval over a cycle of oscillation, and
   processor means for generating from the sum a signal representative of the mass flow.

2. A Coriolis mass flow meter as claimed in claim 1, further comprising means for generating a timing signal for initiating a comparison between the periodic signals for determining which signal is of higher amplitude for each said interval.

3. A Coriolis mass flow meter as claimed in claims 1 or 2, further comprising means for adjusting the peak-to-peak amplitudes of the received signals to be equal.

4. A Coriolis mass flow meter as claimed in claim 1, further comprising: signal processing means for generating a pulse signal from the signals generated by the sensors, the pulse width being representative of the relative phase difference between said signals, and means operable during measuring for compensating for errors introduced by the circuit by reciprocally and alternately applying the error introduced in processing one of the signals to the other signal.

5. A Coriolis mass flow meter according to claim 4, further comprising means for generating a signal indicative of which of the signals from the opposing sensors occurs first in time.

6. A Coriolis mass flow meter according to claim 4, wherein the error compensating means comprises means for applying the signal generated by a preselected one of the sensors to both first and second channels for generating an error compensation signal representative of the errors introduced by the signal processing means in generating the pulse signal.

7. A Coriolis mass flow meter according to claim 6, wherein the means for applying comprises electronic switch means for correcting the signal generated by the preselected sensor to the first and second channels while simultaneously disconnecting the signal generated by the opposite sensor from its associated channel.

8. A Coriolis mass flow meter according to anyone of the claims 4 through 7, wherein the sensors are optical sensors.

9. A Coriolis mass flow meter according to anyone of the claims 4 through 8, wherein the sensors generate signals which vary linearly with respect to the motion of the flow tube.

10. A Coriolis mass flow meter according to anyone of the claims 4 through 9, wherein the sensors comprise means for emitting a light beam and means for receiving the emitted light beam, said receiving means adapted to generate a signal which is continuously varying with respect to the motion of the flow tube.

11. A Coriolis mass flow meter according to claim 10, wherein the signal generated by the receiving means varies proportionally to the distance the light beam travels from the emitted means to the receiver means.

12. A Coriolis mass flow meter according to claim 10, wherein the signal generated by the receiver means varies proportionally with respect to the offset of the emitter means and the receiver means.

13. A Coriolis mass flow meter according to anyone of claims 4 through 7, wherein the sensors further comprise a coil and a magnet such that the relative movement of the coil with respect to the magnet produce a signal linearly proportional to the velocity of the movement of the coil with respect to the magnet.

14. A Coriolis mass flow meter for determining the mass flow of a fluid within a conduit, the apparatus comprising:
a flow tube,
means for periodically oscillating the flow tube transverse to the flow therein,
sensor means for sensing the movement of the flow tube at discrete spaced locations on opposite sides of the oscillating means and generating periodic signals representative of the movement of the flow tube at said locations, and
means for determining the mass flow from the sensor signals comprising
a) subtracter means (162, 164) for determining the absolute value of the difference between the amplitudes of the periodic signals,
b) voltage to frequency converter means (166) and counter means arranged to determine the integral over a cycle of oscillation of the absolute value of the difference determined by the subtracter means, and
c) processor means for generating from the integral a signal representative of the mass flow.

15. A Coriolis mass flow meter comprising:
a flow tube for receiving and exhausting fluid flow,
means for oscillating the flow tube transverse to the direction of flow therein,
sensors located on or adjacent to the flow tube on opposite sides of the oscillating means, the sensors generating signals representative of the motion of the flow tube, and
means for generating from the sensor signals a signal representative of the mass flow through the flow tube, the signal generating means comprising
means (204, 206) arranged to sample the signals at a plurality of discrete and adjacent intervals,
means (210, 202) arranged to determine the amplitude difference of said sampled signals to determine for each said interval the product of the absolute value of the instantaneous amplitude difference and the duration of the interval, and to determine the sum of the products of each interval over a cycle of oscillation, and
processor means for generating from the sum a signal representative of the mass flow.

16. A method of determining the mass flow of a fluid flowing within a Coriolis mass flow meter of the type including a flow tube oscillated periodically transverse to the direction of flow therein, sensors located on or adjacent the flow tube on opposite sides of the oscillation position, the sensors generating signals representative of the motion of the flow tube, and means for generating from the sensor signals a signal representative of the mass flow through the flow tube, the method comprising the steps of:
a. receiving from the sensors periodic signals representative of the movement of the flow tube,
b. determining the instantaneous amplitude difference between the received signals during at least one cycle of the periodic signals,
c. integrating or summing absolute values of the amplitude differences over a cycle of oscillation of the periodic signals and
d. generating therefrom a mass flow signal by using the integrated or summed total of the absolute amplitude differences.

**17.** The method as claimed in claim 16, further comprising the step of applying a scaler factor to the summed amplitude difference.

**18.** The method as claimed in claim 16, further comprising the step of digitizing the instantaneous amplitude difference.

**19.** The method as claimed in claim 16, wherein the amplitude difference is determined at discrete points in time over the period of the signals.

**Patentansprüche**

**1.** Coriolis-Massenfluß-Meßvorrichtung, die aufweist:
ein Strömungsrohr, das quer zur Strömungsrichtung in Schwingung versetzt wird und Sensoren aufweist, die sich an oder neben dem Strömungsrohr an gegenüberliegenden Seiten befinden,
wobei die Sensoren Signale bezeichnend für die Bewegung des Strömungsrohrs erzeugen, und
eine Einrichtung zum Erzeugen eines Signales aus den Sensorsignalen, bezeichnend für den Massenfluß durch das Strömungsrohr, wobei die Einrichtung zum Erzeugen des Signals aufweist
eine Einrichtung (142) zum Bestimmen der augenblicklichen Amplitudendifferenz zwischen den Signalen in einer Vielzahl von diskreten und aufeinanderfolgenden Intervallen,
eine Einrichtung (144) mit Vorkehrungen, um für jedes Intervall das Produkt aus dem absoluten Wert der augenblicklichen Amplitudendifferenz und der Dauer des Intervalls zu bestimmen, und um die Summe der Produkte jedes Intervalls über einen Zyklus der Schwingung zu bestimmen, und
eine Prozessoreinrichtung, zum Erzeugen eines Signales aus der Summe, das bezeichnend für den Massenfluß ist.

**2.** Coriolis-Massenfluß-Meßvorrichtung nach Anspruch 1, die weiterhin eine Einrichtung zum Erzeugen eines Zeitsignales aufweist, das einen Vergleich zwischen den periodischen Signalen veranlaßt, um zu bestimmen, welches Signal eine größere Amplitude für jedes Intervall hat.

**3.** Coriolis-Massenfluß-Meßvorrichtung nach Anspruch 1 oder 2, die weiterhin eine Einrichtung aufweist zum Einstellen der Spitze-zu-Spitze-Amplitudenwerte der empfangenen Signale auf gleiche Werte.

**4.** Coriolis-Massenfluß-Meßvorrichtung nach Anspruch 1, die weiterhin aufweist: eine Signalverarbeitungseinrichtung zum Erzeugen eines Pulssignales aus den durch die Sensoren erzeugten Signalen, wobei die Pulsbreite bezeichnend für den relativen Phasenunterschied zwischen den Signalen ist, und eine Einrichtung, die während der Messung zum Ausgleich von Fehlern dient, die durch die Schaltung eingeführt werden, indem der beim Verarbeiten eines der Signale eingeführte Fehler wechselseitig und abwechselnd an das andere Signal angelegt wird.

**5.** Coriolis-Massenfluß-Meßvorrichtung nach Anspruch 4, die weiterhin eine Einrichtung aufweist zum Erzeugen eines Signales, kennzeichnend dafür, welches Signal von gegentiberliegenden Sensoren zeitlich zuerst auftritt.

**6.** Coriolis-Massenfluß-Meßvorrichtung nach Anspruch 4, wobei die Einrichtung zum Fehlerausgleichen eine Einrichtung aufweist, die das durch einen vorher gewählten Sensor erzeugte Signal an einen ersten und zweiten Kanal anlegt, um ein Fehlerausgleichsignal zu erzeugen, das bezeichnend ist für die Fehler, die durch die Signalverarbeitungseinrichtung beim Erzeugen des Pulssignales eingeführt werden.

**7.** Coriolis-Massenfluß-Meßvorrichtung nach Anspruch 6, wobei die Einrichtung zum Anlegen des durch einen vorher gewählten Sensor erzeugten Signals auf den ersten und zweiten Kanal eine elektronische Schalteinrichtung aufweist zur Korrektur dieses Signales, während sie gleichzeitig das Signal, das durch den gegenüberliegenden Sensor erzeugt wird, von seinem zugehörigen Kanal abtrennt.

**8.** Coriolis-Massenfluß-Meßvorrichtung nach einem der Ansprüche 4 bis 7, wobei die Sensoren optische Sensoren sind.

**9.** Coriolis-Massenfluß-Meßvorrichtung nach einem der Ansprüche 4 bis 8, wobei die Sensoren Signale erzeugen, die sich linear ändern, bezogen auf die Bewegung des Strömungsrohrs.

**10.** Coriolis-Massenfluß-Meßvorrichtung nach einem der Ansprüche 4 bis 9, wobei die Sensoren eine Einrichtung zum Aussenden eines Lichtstrahls und eine Einrichtung zum Empfangen des ausgesendeten Lichtstrahles aufweisen, wobei die Empfangseinrichtung geeignet ist, um ein Signal zu erzeugen, das sich kontinuierlich bezüglich der Bewegung des Strömungsrohrs ändert.

**11.** Coriolis-Massenfluß-Meßvorrichtung nach Anspruch 10, wobei das Signal, das durch die Empfangseinrichtung erzeugt wird, sich proportional zu der Strecke ändert, die der Lichtstrahl von der Sendeeinrichtung zur Empfangseinrichtung zurücklegt.

**12.** Coriolis-Massenfluß-Meßvorrichtung nach Anspruch 10, wobei das Signal, das durch die Empfangseinrichtung erzeugt wird, sich proportional ändert bezüglich des Versatzes der Sendeeinrichtung und der Empfangseinrichtung.

**13.** Coriolis-Massenfluß-Meßvorrichtung nach einem der Ansprüche 4 bis 7, wobei die Sensoren weiter eine Spule und einen Magneten aufweisen, so daß die relative Bewegung der Spule bezüglich des Magneten ein Signal erzeugt, das linear proportional zu der Geschwindigkeit der Bewegung der Spule bezüglich des Magneten ist.

**14.** Coriolis-Massenfluß-Meßvorrichtung zum Bestimmen des Massenflusses eines Fluids innerhalb einer Leitung, wobei die Vorrichtung aufweist:
ein Strömungsrohr,
eine Einrichtung, um das Strömungsrohr quer zum Fluß darin periodisch in Schwingung zu versetzen,
eine Sensoreinrichtung, um die Bewegung des Strömungsrohrs an getrennten, auseinanderliegenden Stellen an gegenüberliegenden Seiten der Schwingeinrichtung zu erfassen und um periodische Signale, bezeichnend für die Bewegung des Strömungsrohrs an diesen Stellen, zu erzeugen, und
eine Einrichtung, um den Massenfluß aus den Sensorsignalen zu bestimmen, welche aufweist
    a) eine Subtraktionseinrichtung (162, 164), um den absoluten Wert der Differenz zwischen den Amplituden der periodischen Signale zu bestimmen,
    b) eine Einrichtung (166) zum Umwandeln von Spannung in Frequenz und eine Zählereinrichtung (180) mit Vorkehrungen, um das Integral über einen Zyklus der Schwingung des absoluten Wertes der Differenz, der durch die Subtraktionseinrichtung bestimmt wurde, zu bestimmen, und
    c) eine Prozessoreinrichtung, um aus dem Integral ein Signal, das bezeichnend für den Massenfluß ist, zu erzeugen.

**15.** Coriolis-Massenfluß-Meßvorrichtung, die aufweist:
ein Strömungsrohr zum Aufnehmen und Abgeben eines Fluidflusses,
eine Einrichtung, um das Strömungsrohr quer zur Richtung des Flusses darin in Schwingung zu versetzen,
Sensoren, die sich an oder neben dem Strömungsrohr an gegenüberliegenden Seiten der Schwingeinrichtung befinden, wobei die Sensoren Signale erzeugen, die bezeichnend für die Bewegung des Strömungsrohrs sind, und
eine Einrichtung zum Erzeugen eines Signales aus den Sensorsignalen, das bezeichnend für den Massenfluß durch das Strömungsrohr ist, wobei die Einrichtung zum Erzeugen des Signals aufweist
eine Einrichtung (204, 206) mit Vorkehrungen, um das Signal an einer Vielzahl von diskreten und benachbarten Intervallen abzutasten,
eine Einrichtung (210, 202) mit Vorkehrungen, um die Amplitudendifferenz der abgetasteten Signale zu bestimmen, um für jedes der Intervalle das Produkt des absoluten Wertes der augenblicklichen Amplitudendifferenz und der Dauer des Intervalles zu bestimmen, und um die Summe der Produkte jedes Intervalles über einen Zyklus der Schwingung zu bestimmen, und
eine Prozessoreinrichtung zum Erzeugen eines Signales aus der Summe, das bezeichnend für den Massenfluß ist.

**16.** Verfahren zum Bestimmen des Massenflusses eines Fluids, das innerhalb einer Coriolis-Massenfluß-Meßvorrichtung fließt, und zwar des Typs, der ein Strömungsrohr aufweist, das periodisch quer zu der Richtung des Flusses schwingt, Sensoren, die sich an oder neben dem Strömungsrohr an gegenüberliegenden Seiten der Schwingstelle befinden, wobei die Sensoren Signale erzeugen, die bezeichnend für die Bewegung des Strömungsrohrs sind, und eine Einrichtung zum Erzeugen eines Signales aus den Sensorsignalen, das bezeichnend für den Massenfluß durch das Strömungsrohr ist, wobei dieses Verfahren die Schritte umfaßt:

a) Empfangen periodischer Signale von den Sensoren, die bezeichnend für die Bewegung des Strömungsrohrs sind,

b) Bestimmen der augenblicklichen Amplitudendifferenz zwischen den empfangenen Signalen während mindestens eines Zyklus der periodischen Signale,

c) Integrieren oder Summieren der absoluten Werte der Amplitudendifferenzen während eines Schwingungszyklus der periodischen Signale, und

d) Erzeugen eines Massenflußsignales durch Verwenden des integrierten oder summierten Gesamtbetrages der absoluten Amplitudendifferenzen.

17. Verfahren nach Anspruch 16, das weiterhin den Schritt umfaßt, einen Skalierungsfaktor auf die summierte Amplitudendifferenz anzusetzen.

18. Verfahren nach Anspruch 16, das weiterhin den Schritt des Digitalisierens der augenblicklichen Amplitudendifferenz aufweist.

19. Verfahren nach Anspruch 16, wobei die Amplitudendifferenz an diskreten Zeitpunkten über die Periode der Signale bestimmt wird.

**Revendications**

1. Un débitmètre massique Coriolis, comprenant :

- un tube d'écoulement, que l'on fait osciller transversalement à la direction d'écoulement et qui comporte des capteurs situés sur le tube d'écoulement ou adjacents à celui-ci sur des côtés opposés du tube d'écoulement,
les capteurs produisant des signaux représentatifs du déplacement du tube d'écoulement, et

- des moyens pour produire, à partir des signaux des capteurs, un signal représentatif du débit massique dans le tube d'écoulement, ces moyens générateurs de signal comprenant :

. des moyens (142) pour déterminer la différence d'amplitude instantanée entre les signaux sur une pluralité d'intervalles distincts et adjacents,

. des moyens (144) conçus de manière à déterminer, pour chacun de ces intervalles, le produit de la valeur absolue de la différence d'amplitude instantanée par la durée de l'intervalle, et pour déterminer la somme des produits de chaque intervalle sur un cycle d'oscillation, et

. des moyens processeurs, pour produire à partir de la somme un signal représentatif du débit massique.

2. Un débitmètre massique Coriolis selon la revendication 1, comprenant en outre des moyens pour produire un signal de séquencement pour initier une comparaison entre les signal périodiques pour déterminer celui des signaux qui a l'amplitude la plus élevée pour chacun des intervalles.

3. Un débitmètre massique Coriolis selon la revendication 1 ou 2, comprenant en outre des moyens pour ajuster les amplitudes crête-à-crête des signaux reçus de manière à les rendre égales.

4. Un débitmètre massique Coriolis selon la revendication 1, comprenant en outre : des moyens processeurs de signal pour produire un signal impulsionnel à partir des signaux produits par les capteurs, la largeur d'impulsion étant représentative du déphasage relatif entre ces signal ; et des moyens, activables pendant la mesure, pour compenser les erreurs introduites par le circuit par application, de façon réciproque et alternée, de l'erreur introduite lors du traitement de l'un des signaux, à l'autre signal.

5. Un débitmètre massique Coriolis selon la revendication 4, comprenant en outre des moyens pour produire un signal indiquant celui des signaux issus des capteurs opposés qui se présente le premier dans le temps.

6. Un débitmètre massique Coriolis selon la revendication 4, dans lequel les moyens compensateurs d'erreur comprennent des moyens pour appliquer le signal, produit par un capteur choisi à l'avance parmi les capteurs, à la fois à une première et à une seconde voie pour produire un signal de compensation d'erreur représentatif des erreurs introduites par les moyens de traitement de signal lors de la production du signal impulsionnel.

7. Un débitmètre massique Coriolis selon la revendication 6, dans lequel les moyens pour appliquer comprennent des moyens commutateurs électroniques pour corriger le signal, produit par le capteur choisi à l'avance, à la première et à la seconde voie tout en déconnectant simultanément le signal produit par le capteur opposé d'avec sa voie associée.

8. Un débitmètre massique Coriolis selon l'une quelconque des revendications 4 à 7, dans lequel les capteurs sont des capteurs optiques.

9. Un débitmètre massique Coriolis selon l'une quelconque des revendications 4 à 8, dans lequel les capteurs produisent des signaux qui varient linéairement en fonction du déplacement du tube d'écoulement.

10. Un débitmètre massique Coriolis selon l'une quelconque des revendications 4 à 9, dans lequel les capteurs comprennent des moyens pour émettre un faisceau lumineux et des moyens pour recevoir le faisceau lumineux émis, les moyens récepteurs étant conçus pour produire un signal qui varie de façon continuelle en fonction du déplacement du tube d'écoulement.

11. Un débitmètre massique Coriolis selon la revendication 10, dans lequel le signal produit par les moyens récepteurs varie proportionnellement avec la distance que parcourt le faisceau lumineux depuis les moyens émetteurs jusqu'aux moyens récepteurs.

12. Un débitmètre massique Coriolis selon la revendication 10, dans lequel le signal produit par les moyens récepteurs varie proportionnellement avec le décalage entre les moyens émetteurs et les moyens récepteurs.

13. Un débitmètre massique Coriolis selon l'une quelconque des revendications 4 à 7, dans lequel les capteurs comprennent en outre un bobinage et un aimant tels que le déplacement relatif du bobinage par rapport à l'aimant produise un signal linéairement proportionnel à la vitesse de déplacement du bobinage par rapport à l'aimant.

14. Un débitmètre massique Coriolis pour déterminer le débit massique d'un fluide dans une conduite, ce dispositif comprenant :
   - un tube d'écoulement,
   - des moyens pour faire osciller périodiquement le tube d'écoulement transversalement à l'écoulement qui le traverse,
   - des moyens capteurs, pour capter le déplacement du tube d'écoulement en des emplacements distincts, espacés les uns des autres, sur des côtés opposés des moyens oscillateurs et pour produire des signaux périodiques représentatifs du déplacement du tube d'écoulement en ces emplacements, et
   - des moyens pour déterminer le débit massique à partir des signaux des capteurs, comprenant :
   a) des moyens soustracteurs (162, 164), pour déterminer la valeur absolue de la différence entre les amplitudes des signaux périodiques,
   b) des moyens convertisseurs de tension en fréquence (166) et des moyens compteurs (180), conçus pour déterminer l'intégrale, sur un cycle d'oscillation, de la valeur absolue de la différence déterminée par les moyens soustracteurs, et
   c) des moyens processeurs, pour produire à partir de l'intégrale un signal représentatif du débit massique.

15. Un débitmètre massique Coriolis, comprenant :
   - un tube d'écoulement, qui reçoit et qui laisse s'échapper un écoulement de fluide,
   - des moyens pour faire osciller le tube d'écoulement transversalement à la direction de l'écoulement qui le traverse,

- des capteurs situés, sur le tube d'écoulement ou adjacents à celui-ci, sur des côtés opposés des moyens oscillateurs, les capteurs produisant des signaux représentatifs du déplacement du tube d'écoulement, et
- des moyens pour produire, à partir des signaux des capteurs, un signal représentatif du débit massique dans le tube d'écoulement, ces moyens générateurs de signal comprenant :
  - . des moyens (204, 206) conçus pour échantillonner les signaux sur une pluralité d'intervalles distincts et adjacents,
  - . des moyens (210, 202) conçus pour déterminer la différence d'amplitude de ces signaux échantillonnés afin de déterminer, pour chacun des intervalles, le produit de la valeur absolue de la différence d'amplitude instantanée par la durée de l'intervalle et pour déterminer la somme des produits de chaque intervalle sur un cycle d'oscillation, et
  - . des moyens processeurs, pour produire à partir de la somme un signal représentatif du débit massique.

16. Un procédé pour déterminer le débit massique d'un fluide s'écoulant dans un débitmètre massique Coriolis du type comprenant un tube d'écoulement que l'on fait osciller périodiquement transversalement à la direction de l'écoulement qui le traverse, des capteurs situés, sur le tube d'écoulement ou adjacents à celui-ci, sur des côtés opposés de la position d'oscillation, les capteurs produisant des signaux représentatifs du déplacement du tube d'écoulement, et des moyens pour produire à partir des signaux des capteurs un signal représentatif de l'écoulement massique dans le tube d'écoulement, ce procédé comprenant les étapes de :

   a) réception, en provenance des capteurs, de signaux périodiques représentatifs du déplacement du tube d'écoulement,

   b) détermination de la différence d'amplitude instantanée entre les signaux reçus pendant au moins un cycle des signaux périodiques,

   c) intégration ou sommation des valeurs absolues des différences d'amplitude sur un cycle d'oscillation des signaux périodiques, et

   d) production, à partir de ce qui précède, d'un signal de débit massique en utilisant les totaux intégrés ou sommés des différences d'amplitude absolues.

17. Le procédé de la revendication 16, comprenant en outre l'étape d'application, à la différence d'amplitude sommée, d'un facteur de mise à l'échelle.

18. Le procédé de la revendication 16, comprenant en outre l'étape de numérisation de la différence d'amplitude instantanée.

19. Le procédé de la revendication 16, dans lequel la différence d'amplitude est déterminée en des instants temporels distincts sur la période des signaux.

FIG. 1

FIG. 2

FIG. 3

*32a*

*44*

*36*

*45*

*32b*

*38*

*22*

*24*

*FIG. 4*

FIG. 5

# FIG. 6

# FIG. 7

# FIG. 8

FIG. 9

$$M_T = (T_3 - T_2) - (T_1 - T_\emptyset)$$
MEASUREMENT CYCLE

*FIG. 10*

*FIG. 11*

FIG. 12

EP 0 275 367 B1

FIG. 13

FIG.14

EP 0 275 367 B1

# FIG.15